# EUROPEAN PATENT APPLICATION

(11) **EP 3 812 560 A1**
(43) Date of publication of application: **28.04.2021**
(21) Application number: 20201449.4
(22) Date of filing: 13.10.2020
(51) Int. Cl.: F02C 3/10

(54) **TURBOSHAFT**

(30) Priority: 23.10.2019 US 201962924726 P
(71) Applicant: Rolls-Royce plc, London N1 9FX (GB); Rolls-Royce Deutschland Ltd & Co KG, 15827 Blankenfelde-Mahlow (DE); Rolls-Royce Corporation, Indianapolis, IN 46225 (US)
(72) Inventor: Taylor, Mark, Derby, DE24 8BJ (GB); Janke, Erik, 12307 Berlin (DE); Stieger, Rory, Derby, Derbyshire DE24 8BJ (GB); Swain, Daniel, Fishers, IN Indiana 46040 (US)
(74) Representative: Rolls-Royce plc

(57) **Abstract**

A turboshaft gas turbine engine comprises, in fluid flow series, a gas-generator compressor, a combustor, a gas-generator turbine, and a free power turbine. The gas-generator turbine is a single stage turbine having a specific work of from 200 to 350 kilojoules per kilogram, said specific work being the power output of the turbine per unit mass flow therethrough.

## Description

### TECHNICAL FIELD

This disclosure relates to turboshaft gas turbine engines, in particular gas turbine engines with a single-spool gas-generator and a free power turbine.

### BACKGROUND

Turboshaft-configuration gas turbines are known. Single-spool turboshaft engines comprise a turbine which drives a compressor and the load, whilst in single-spool, free power turbine engines one turbine drives the compressor (forming a *gas-generator* spool) and another drives the load. Most turboshaft engines are designed to drive loads which require a fixed synchronous speed (such as in electrical power generation) or operate according to a cube-law (such as ship propellers).

By constraining the rotational speed of the engine output shaft in this manner, most turboshaft engine designs suffer from exceptionally poor part-load specific fuel consumption. This is especially the case where a base engine is design is shared across a variety of products having different rated powers.

It is therefore desirable to provide a turboshaft engine architecture which delivers improved specific fuel consumption at part load.

### SUMMARY

According to an aspect, there is provided a turboshaft gas turbine engine comprising, in fluid flow series, a gas-generator compressor, a combustor, a gas-generator turbine, and a free power turbine, characterised in that:
the gas-generator turbine is a single stage turbine having a specific work of from 200 to 350 kilojoules per kilogram, said specific work being the power output of the turbine per unit mass flow therethrough.

The combination of a high specific work gas-generator turbine and a free power turbine results in an engine which, when throttled back to 50 percent power, still offers improvements in specific fuel consumption over a single-spool turboshaft having an equivalent maximum rated power.

In an embodiment, the gas-generator turbine comprises an uncooled rotor.

In an embodiment, the gas-generator turbine comprises a supersonic throughflow stator and a subsonic throughflow rotor.

In an embodiment, the specific work of the gas-generator turbine is from 200 to 290 kilojoules per kilogram.

In an embodiment, the degree of reaction of the gas-generator turbine is from 0.15 to 0.4.

In an embodiment, the specific work of the gas-generator turbine is from 240 to 270 kilojoules per kilogram.

In an embodiment, the degree of reaction of the gas-generator turbine is from 0.25 to 0.33.

In an embodiment, the gas-generator turbine comprises a cooled rotor cooled by air bled from the gas-generator compressor.

In an embodiment, the gas-generator turbine comprises a supersonic throughflow stator and a supersonic throughflow rotor.

In an embodiment, the specific work of the gas-generator turbine is from 290 to 350 kilojoules per kilogram.

In an embodiment, the degree of reaction of the gas-generator turbine is from 0.4 to 0.55.

In an embodiment, the specific work of the gas-generator turbine is from 305 to 330 kilojoules per kilogram.

In an embodiment, the degree of reaction of the gas-generator turbine is from 0.43 to 0.51.

In an embodiment, the free power turbine is one of:
a single-stage free power turbine;
a two-stage free power turbine.

In an embodiment, the gas-generator turbine and the free power turbine are arranged to contra-rotate.

### BRIEF DESCRIPTION OF THE DRAWINGS

Embodiments will now be described by way of example only with reference to the accompanying drawings, which are purely schematic and not to scale, and in which:
Figure 1 is a block diagram illustrating an embodiment of a turboshaft gas turbine engine;
Figure 2 is a block diagram illustrating another embodiment of a turboshaft gas turbine engine
Figure 3 is a general arrangement of the engine of Figure 1 with a single stage free power turbine;
Figure 4 is a general arrangement of the engine of Figure 2 with a single stage free power turbine; and
Figure 5 is a general arrangement of the engine of Figure 1 with a two stage free power turbine.

### DETAILED DESCRIPTION

In the Figures, station numbering according to ARP 755A is used.

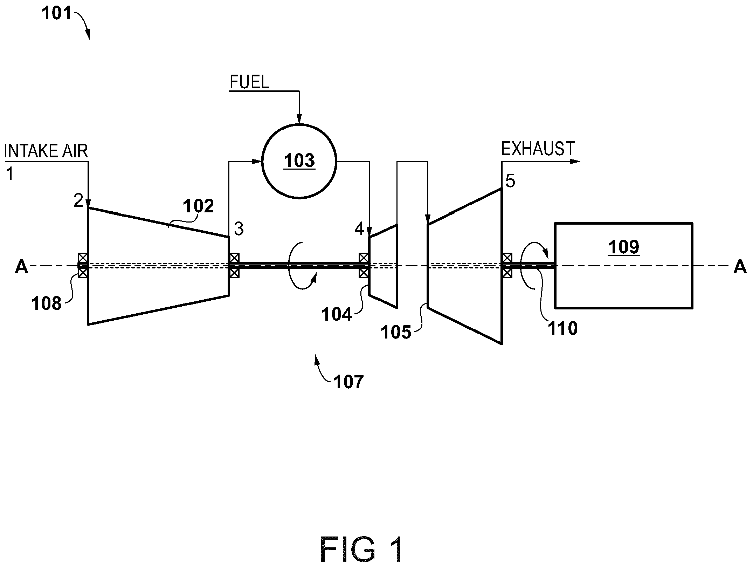

A block diagram illustrating a first embodiment of a turboshaft gas turbine engine is shown in Figure 1.

The engine, identified generally by numeral 101, comprises in fluid flow series a gas-generator compressor 102, a combustor 103, a gas-generator turbine 104, and a free power turbine 105. It will be appreciated that as the engine of a single-spool, free power turbine configuration, there is no turbomachinery upstream of the gas-generator compressor 102. The gas-generator compressor 102 and the gas-generator turbine 104 are mechanically linked so as to rotate in unison around an engine centreline A-A by an interconnecting shaft 106, and together form a gas-generator spool 107. Bearings 108 support the gas-generator spool 107 relative to static structures of the engine 101. The free power turbine 105 is mechanically linked with a load 109 via an output shaft 110.

In operation, intake air is received at station 1 and enters the gas-generator compressor 102 at station 2. The air is compressed by the gas-generator compressor 102, and exits therefrom at station 3 where it is supplied to the combustor 103, mixed with fuel and ignited. The hot combustion products leave the combustor 103 at station 4 and are expanded through the gas-generator turbine 104, causing it to rotate and drive the compressor 102. At this point the flow exiting the gas-generator turbine 104 still comprises a significant amount of enthalpy, which develops work in the free power turbine 105, thereby driving the load 109.

In this embodiment, the gas-generator turbine 104 rotor is uncooled, and thus receives no flow of cooling air from the gas-generator compressor 102. In this embodiment therefore the gas-generator turbine 104 is comprised of a material with sufficient thermal capability such that it does not require cooling. In an embodiment, said material is a ceramic. In a specific embodiment, the ceramic is composite ceramic material such as a ceramic matrix composite (CMC). One suitable type of CMC is a silicon carbide/silicon carbide CMC, although other CMC types may be specified. In another specific embodiment, the ceramic is a monolithic ceramic. For example, the monolithic ceramic may be silicon nitride.

In this embodiment, the design point pressure ratio of the compressor 102 is from 10 to 13. In a specific embodiment, the design point pressure ratio of the compressor 102 is 12. As used herein, the term "design point" for the engine 101 is the maximum rated power operating condition at International Standard Atmosphere sea level static conditions.

In the present embodiment, the free power turbine 105 is configured to rotate around the engine centreline A-A. It will be appreciated that in alternative embodiments the free power turbine 105 may be located on an axis different from the engine centreline A-A.

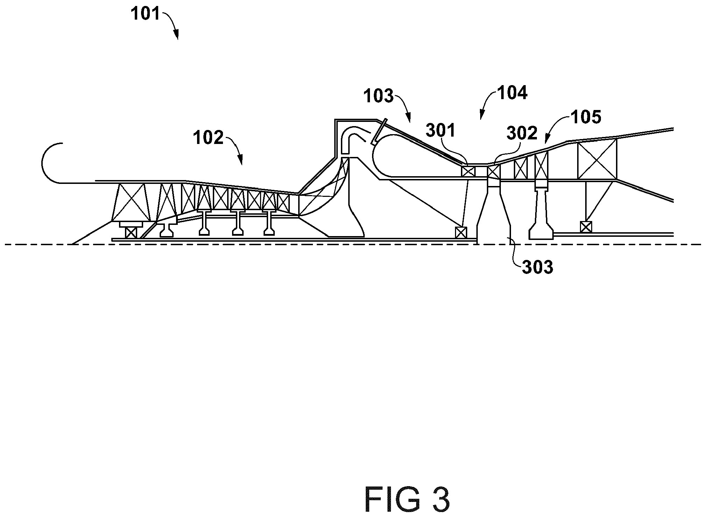

In the present embodiment, the free power turbine 105 is configured to rotate in the opposite direction to the gas-generator turbine 104, i.e. they are arranged to contra-rotate. As will be described further with reference to Figures 3 onward, this may reduce the amount of flow turning required between the turbine stages. However, in alternative embodiments the free power turbine 105 may instead be configured to co-rotate with the gas-generator turbine 104.

In the present embodiment, the load 109 is a variable-speed load. For example, the load may be a load compressor for supplying compressed air, or the load may be a variable-frequency electrical generator, or any other variable-speed load or combinations thereof. It is contemplated that the engine 101 may be particularly well suited as an auxiliary power unit for an aircraft, in which it is tasked with providing compressed air for the cabin and electrical power for services on the aircraft.

In the configuration shown in Figure 1, the gas-generator spool 107 and the combination of the free power turbine 105 and the load 109 are both able to vary in speed. In this way, fuel consumption and emissions may be reduced.

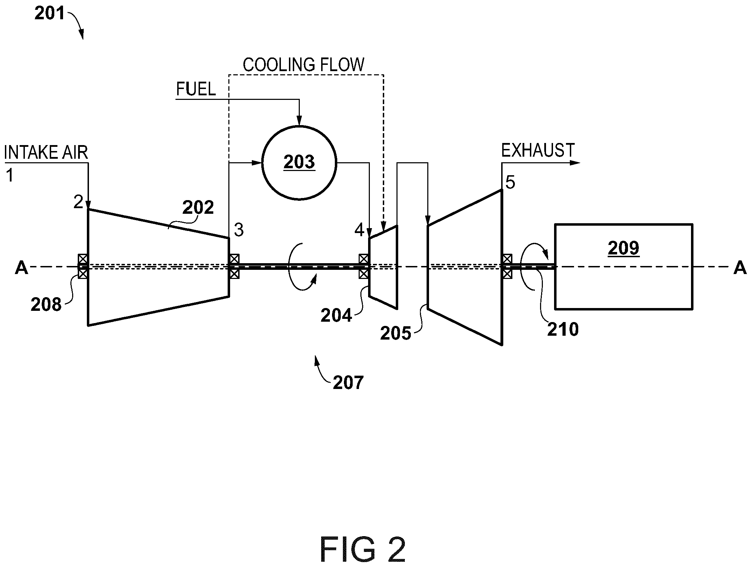

A block diagram illustrating a second embodiment of a turboshaft gas turbine engine is shown in Figure 2. This engine, identified by numeral 201, shares much the same configuration as the engine 101 of Figure 1, and so like features are identified with the same numerals incremented by 100.

In this example, though, the gas-generator turbine 204 comprises a cooled rotor. Thus, air compressed by the gas-generator compressor 202 is supplied to the gas-generator turbine 204 to remove heat therefrom. In this way, the thermal capability of the turbine blades may be relaxed in comparison to those in the gas-generator turbine 104. Thus, in an example the blades gas-generator turbine 204 may be comprised of an alloy, for example a superalloy. One such superalloy may be a nickel-base superalloy, such as an Inconel (RTM) alloy. Other superalloy types could also be used, for example a cobalt-base alloy, or combinations thereof such as Mar M (RTM) alloys.

As will be appreciated, the requirement to supply cooling air to the gas-generator turbine 204 means that a degree of work expended by the compressor 202 effectively escapes the gas-generator thermodynamic cycle, and does not contribute to work delivered by the gas-generator turbine 204. Thus, in this embodiment, the design point pressure ratio of the compressor 202 is from 13 to 17. In a specific embodiment, the design point pressure ratio of the compressor 202 is 16.

As set out in the introduction, turboshaft engines according to the invention select a gas-generator turbine with a specific work of from 200 to 300 kilojoules per kilogram. The engine 101 described with reference to Figure 1, in which the gas-generator turbine 104 is an uncooled turbine, may adopt a gas-generator turbine configuration with a specific work towards the lower end of the aforesaid range, for example from 200 to 250 kilojoules per kilogram. This is because no flow is bled from the gas-generator compressor 102 to cool the turbine. In turn this means that a lower pressure compressor design may be adopted, as in these circumstances there is a negligible difference in specific fuel consumption between a high pressure ratio design, for example a design point pressure ratio of 16, compared to a moderate pressure ratio design, for example a design point pressure ratio of 12. It is therefore possible to provide a compressor configuration with such a moderate pressure ratio, but which exhibits a much higher compression efficiency.

In an embodiment, the gas-generator turbine 104 is a high-work single stage low reaction turbine, which will be described further with reference to Figure 3.

For the engine 201 described with reference to Figure 2, in which the gas-generator turbine 204 is a cooled turbine a gas-generator turbine configuration with a specific work towards the upper end of the aforesaid range may be adopted, for example from 250 to 300 kilojoules per kilogram. In this case a higher pressure ratio compressor design, for example a design point pressure ratio of 16 may be required in order to provide the requisite cooling flow for the gas-generator turbine rotor. In such a configuration, less exotic materials may be used and/or greater life may be achieved by use of cooling air.

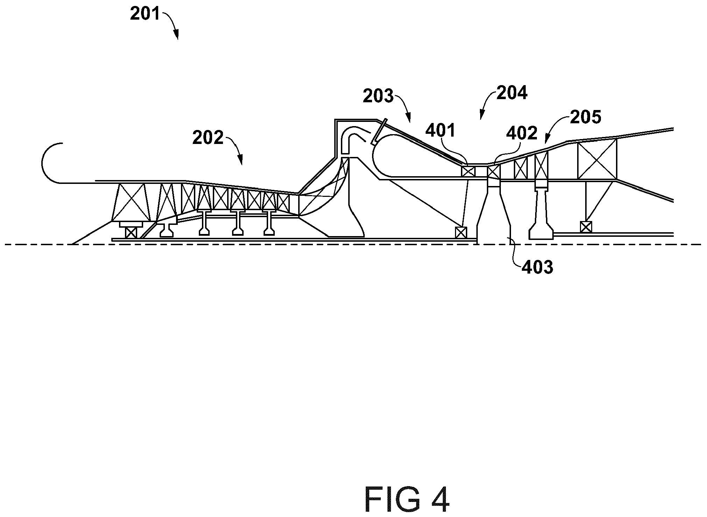

In an embodiment, the gas-generator turbine 204 is a high-work single stage supersonic turbine, which will be described further with reference to Figure 4.

The inventors have found that throttled back performance with the levels of specific work set out herein, for example even at only 50 percent of rated power output, is surprisingly efficient, in particular when compared to a single-spool design of equivalent rated power. This is the case both with the cooled and uncooled gas-generator turbine configurations.

The reason for this is that following selection of the specific work of the gas-generator turbine, along with the peak stator outlet temperature (T₄₁), the shaft power that can be delivered by the gas-generator turbine is fixed. As the turboshaft engines according to the invention are single-spool, free power turbine engines, all of the power delivered by the gas-generator turbine must be, to a first order (and thus ignoring, for example, inevitable mechanical losses) consumed by the gas-generator compressor. The shaft power input into the compressor sets the compressor exit temperature (T₃₀) for a given inlet temperature (T₂₀) and mass flow (W₂₀). For a given compressor efficiency, this sets the compressor pressure ratio. It is therefore possible to define a part load compressor pressure ratio, and in turn a stator outlet temperature, which deliver a satisfactory cycle efficiency at that power level, recalling that for a Brayton cycle the dominant parameter in terms of thermal efficiency is overall pressure ratio.

A general arrangement of the engine 101 is shown in Figure 3. In this particular example, the free power turbine 105 is a single stage free power turbine. As described previously, in this embodiment the gas-generator 104 is a high-work single stage low reaction turbine. The gas-generator turbine 104 comprises a stator having a plurality of nozzle guide vanes 301, followed by a rotor having a plurality of blades 302 mounted on a disc 303. As can be seen in the Figure, the adoption of a free power turbine 205 allows the disc 303 to be made solid and thus thinner in an axial sense.

In this example, the gas-generator turbine rotor is uncooled, and so all flow delivered by gas generator compressor 102 is developed into shaft work by the turbine 104. Thus, as described previously, a more moderate pressure ratio for the compressor 102 may be adopted, for example from 10 to 14, and more particularly, 12. Thus, in this embodiment, the gas-generator turbine 104 has a supersonic throughflow stator and a subsonic throughflow rotor. Thus, the degree of reaction of the stage is less than 0.5, which will be understood by those skilled in the art to reflect an equal enthalpy drop across the stator and the rotor in the stage. In a specific embodiment, the degree of reaction of the gas generator turbine 104 stage is from 0.15 to 0.4. This corresponds to a selection of specific work of from 200 to 290 kilojoules per kilogram. In a more specific embodiment, the degree of reaction of the stage is from 0.25 to 0.33. This corresponds to a selection of specific work of from 240 to 270 kilojoules per kilogram kilojoules per kilogram. In a more specific embodiment, the degree of reaction of the stage is 0.3. This corresponds to a selection of specific work of 260 kilojoules per kilogram. Selections within these ranges results in a highly efficient turbine stage which produces sufficient work to drive the compression system at a pressure ratio for satisfactory specific fuel consumption over a wide range of power settings.

Due to the high-work single stage design adopted for the gas-generator turbine 104, in the present embodiment the free power turbine 105 is arranged to contra-rotate relative to the gas-generator turbine 104. As will be appreciated by those skilled in the art, a high-work single stage design exhibits high tangential exit Mach numbers and thus a high degree of exit swirl. By arranging the free power turbine 105 in contra-rotation, it is possible to avoid having to provide a further inter-stage vane to provide flow-turning.

A general arrangement of the engine 201 is shown in Figure 4. In this particular example, the free power turbine 105 is also a single stage free power turbine. As described previously, in this embodiment the gas-generator 204 is a high-work single stage turbine. The gas-generator turbine 204 comprises a stator having a plurality of nozzle guide vanes 401, followed by a rotor having a plurality of blades 402 mounted on a disc 403.

In this example, the gas-generator turbine rotor is uncooled, and so all flow delivered by gas generator compressor 202 is developed into shaft work by the turbine 204. Thus, as described previously, a greater pressure ratio for the compressor 202 may be adopted, for example from 13 to 17, and more particularly, 16. Thus, in this embodiment, the gas-generator turbine 204 has both a supersonic throughflow stator and a supersonic throughflow rotor. Thus, in this embodiment the degree of reaction of the stage is closer to 0.5, which will be understood by those skilled in the art to reflect an equal enthalpy drop across the stator and the rotor in the stage. In a specific embodiment, the degree of reaction of the gas generator turbine 204 stage is from 0.4 to 0.55. This corresponds to a selection of specific work of from 290 to 350 kilojoules per kilogram. In a more specific embodiment, the degree of reaction of the stage is from 0.43 to 0.51. This corresponds to a selection of specific work of from 305 to 330 kilojoules per kilogram. In a more specific embodiment, the degree of reaction of the stage is 0.47. This corresponds to a selection of specific work of 320 kilojoules per kilogram. This selection results in a single stage turbine arrangement which produces sufficient work to drive the compression system at the high pressure ratios defined above.

As with the engine 101, the adoption of a free power turbine 205 allows the disc 403 to be made solid and thus thinner in an axial sense.

As with the engine 101, in an embodiment the free power turbine 205 and the gas-generator turbine 204 are arranged to contra-rotate so as to accommodate the high levels of exit swirl from the gas-generator turbine 204.

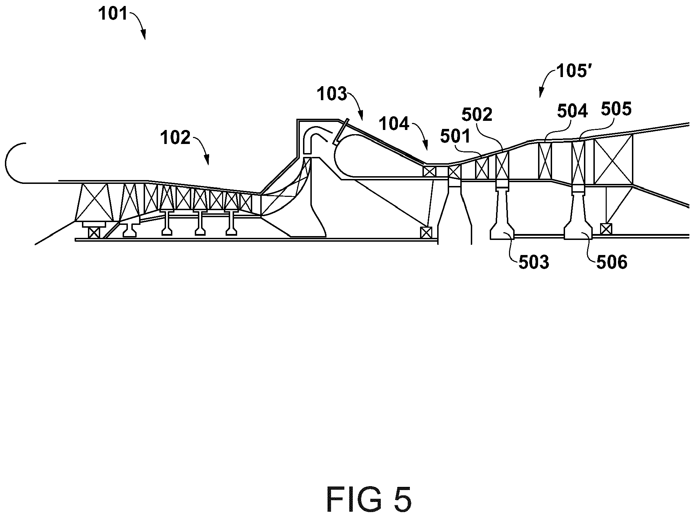

A further general arrangement of the engine 101 is illustrated in Figure 5, although in this example the free power turbine is a two-stage free power turbine 105'. It therefore includes a first stage comprising a stator having nozzle guide vanes 501 and a rotor having blades 502 mounted on a disc 503. A second stage axially downstream of the first stage comprising a stator having nozzle guide vanes 504 and a rotor having blades 505 mounted on a disc 506.

It will be appreciated by those skilled in the art that the use of a two-stage free power turbine allows either a higher shaft power output by way of an increase in enthalpy drop across the turbine, or alternatively the use of a lower stage loading and thus an improvement in expansion efficiency for the same work output. The use of a two-stage turbine like the free power turbine 105 is also envisaged as being possible with the engine 201.

Various examples have been described, each of which feature various combinations of features. It will be appreciated by those skilled in the art that, except where clearly mutually exclusive, any of the features may be employed separately or in combination with any other features and the invention extends to and includes all combinations and subcombinations of one or more features described herein.

## Claims

1. A turboshaft gas turbine engine comprising, in fluid flow series, a gas-generator compressor, a combustor, a gas-generator turbine, and a free power turbine, **characterised in that**:
the gas-generator turbine is a single stage turbine having a specific work of from 200 to 350 kilojoules per kilogram, said specific work being the power output of the turbine per unit mass flow therethrough.

2. The gas turbine engine of claim 1, in which the gas-generator turbine comprises an uncooled rotor.

3. The gas turbine engine of claim 2, in which the gas-generator turbine comprises a supersonic throughflow stator and a subsonic throughflow rotor.

4. The gas turbine engine of claim 2, in which the specific work of the gas-generator turbine is from 200 to 290 kilojoules per kilogram.

5. The gas turbine engine of claim 4, in which the degree of reaction of the gas-generator turbine is from 0.15 to 0.4.

6. The gas turbine engine of claim 2, in which the specific work of the gas-generator turbine is from 240 to 270 kilojoules per kilogram.

7. The gas turbine engine of claim 6, in which the degree of reaction of the gas-generator turbine is from 0.25 to 0.33.

8. The gas turbine engine of claim 1, in which the gas-generator turbine comprises a cooled rotor cooled by air bled from the gas-generator compressor.

9. The gas turbine engine of claim 8, in which the gas-generator turbine comprises a supersonic throughflow stator and a supersonic throughflow rotor.

10. The gas turbine engine of claim 8, in which the specific work of the gas-generator turbine is from 290 to 350 kilojoules per kilogram.

11. The gas turbine engine of claim 10, in which the degree of reaction of the gas-generator turbine is from 0.4 to 0.55.

12. The gas turbine engine of claim 8, in which the specific work of the gas-generator turbine is from 305 to 330 kilojoules per kilogram.

13. The gas turbine engine of claim 12, in which the degree of reaction of the gas-generator turbine is from 0.43 to 0.51.

14. The gas turbine engine of claim 1, in which the free power turbine is one of:
a single-stage free power turbine;
a two-stage free power turbine.

15. The gas turbine engine of claim 1, in which the gas-generator turbine and the free power turbine are arranged to contra-rotate.
